# EUROPEAN PATENT SPECIFICATION

(11) **EP 0 437 426 B1**
(45) Date of publication and mention of the grant of the patent: **24.08.1994**
(21) Application number: 88910187.9
(22) Date of filing: 25.11.1988
(51) Int. Cl.: B05C 5/02, B05D 1/26, F04B 43/12, H05K 3/34

(54) **A METHOD AND A DEVICE FOR METERING A LIQUID MATERIAL**
VERFAHREN UND ANORDNUNG ZUR DOSIERUNG EINES FLÜSSIGEN MATERIALS
PROCEDE ET DISPOSITIF DE DOSAGE D'UN MATERIAU LIQUIDE

(30) Priority: 25.11.1987 SE 8704685
(43) Date of publication of application: 24.07.1991
(73) Proprietor: Mydata Automation AB, 168 66 Bromma (SE)
(72) Inventor: STRIDSBERG, Lennart, S-122 42 Enskede (SE)
(74) Representative: Hopfgarten, Nils
(86) International application number: SE8800648
(87) International publication number: WO8904728

(56) References cited:
- EP-A- 0 090 440
- EP-A- 0 214 443
- GB-A- 1 473 688
- US-A- 4 199 307
- Elteknik med aktuell elektronik 1984:15, September "Ymontering tillförlitligt" page 35, fig b) with corresponding tex and page 37, fig. with corresponding text.
- Derwent's abstract, 87-227818/32, SU 1280-190
- Modern Elektronik 18/84, Ytmontering 1984-11-09 "Lodpasta och Lim", page 34, column 5, lines 38 to 55, page 35, column 1, lines 37 to 55

## Description

The present invention relates to a method and a device for metering a liquid material, especially for applying viscous material such as pastes, adhesives and similar material in metered amounts. More particularly, the invention is intended to satisfy the need of being able to apply, in a high speed, small volumes of adhesives, tin paste and other materials on a target surface which normally is flat. An important application of the invention is applying of soldering paste to circuit boards.

When surface mounting components on a circuit board, it is required that all soldering isles, before mounting the components, are provided with an amount of soldering paste adapted to the component legs of said soldering isle. In performing this it is also required that the applied volume of each soldering isle can be adjusted to the requirements of the actual size of the isle and that the applied volumes are kept within certain tolerances.

To be able to be in pace with succeeding mounting machines a very high capacity is required. An ordinary integrated circuit of the type SOL-20 can in many systems be mounted in 1 - 2 seconds. To be able to have the same speed a soldering paste applying machine must place 20 soldering paste points in 1 - 2 seconds or 20 - 10 paste points per second.

Hereinafter the designation "material" will be used for the various liquid materials which can be used with the invention. These liquid materials are especially viscous materials as soldering paste and glue.

Available equipment for pointwise application has low speed. Most machines are based on the fact that a predetermined pressure is used during an adjustable time for expressing the material through a pipe or a nozzle having a predetermined inner diameter, which gives a low repeatability. Those few systems using some form of volume determination with mechanical methods have heavy volume determining heads being transported upwards and downwards for each point to be applied. This gives slow movements and a low capacity.

Instead of applying soldering paste pointwise screen printing is normally used instead, but this will produce long set up times. The same method is also sometimes used for other materials, e.g. glue.

The purpose of the invention is to produce a method and a device making it possible to apply or meter material, with a relatively high speed, in small points having volumes, which can be chosen within certain limits, and with a good repeatability for the volume chosen. This is produced by means of the method and the device, the various features of which are defined by the accompanying claims.

Thus it is suggested that a soft hose is used, i.e. a hose which can be compressed to enable expressing the material which is present within the hose. In order to obtain a metered amount inlet and outlet valves are provided for the hose. In addition some type of arrangement is provided to compress the hose with a determined and periodical stroke when material is to be applied to a surface. The outlet end of the hose is connected to a suitable nozzle. Further the other end of the hose, its inlet end, is connected to a material supply.

The compressing device is preferably a stamp-like element or press head moving forwards and backwards, preferably perpendicularly to a longitudinal axis of the hose in such a way that the front surface of the press head will contact the hose during part of the stroke. The stroke of the press head can naturally be adjustable to enable metering different volumes. In order to make the effect of the compressing device effective the hose is advantageously mounted on a rigid base or first part.

The compressing device is mounted on a second part carrying protruding portions contacting the wall of the hose on suitable times, in this way constituting at least one of the inlet and outlet valves.

A metering pump having essentially this construction is disclosed in the patent document SU 1280-190, this metering pump being described as using an elastic chamber having a tubular form. The elastic chamber rests on a first pump part and in a second pump part valve rods are operated to contact the exterior of the elastic chamber to form an inlet or suction valve and a discharge valve. Between the valves a plunger is moved to compress the elastic chamber in order to discharge the material inside the chamber. The two pump body parts are not moved during pump operation. The prior pump design will necessitate a costly control, such as a hydraulic or electric control, of both the valve stems and the compression plunger.

According to the invention, the first part and the second part are movable in relation to each other and their movement is controlled in such a way that the pressing surface of the compressing device and the engaging surface on the different protruding portions will contact the wall of the hose on suitable times. The compressing device is also formed by a portion projecting from the second part.

The protruding portions of the second part forming at least one of said outlet and inlet valves, are more or less shaped with acute angles and are conveniently spring loaded in such a way that they are able to press into the soft hose with a force sufficient to cut off the material flow through the hose, not making this force so great that it can damage the surface of the hose.

In the specialized form of the invention there are protruding cams mounted on the second part, these forming the inlet and the outlet valve respectively. Between these cams there is another protruding portion forming the compressing device or the press head. The second part is rigidly mounted to the frame of the machine and the first part performs a swinging movement forwards and backwards about a swinging axis being substantially perpendicular to the hose. Naturally, also the opposite arrangement, that is with a fixedly located first part and a swingable second part, may be used.

However, when the first part performs the said swinging movement forwards and backwards, the nozzle can also preferably be rigidly mounted on the movable part. When this device is operating, also the nozzle will move alternately upwards and downwards, for instance with a stroke length of 5 mm. This distance is sufficient to make it possible that the expressed material, in the movement of the nozzle upwards, will be separated from the material remaining inside the nozzle. Further, also the valve functions are obtained in the same movement and by the same device which lifts and lowers the nozzle, and this swinging movement and movable part can also produce the pressure for ejection of the material. The device will in this way have a simple structure and the movable part of the device will have a small mass.

These advantages are also present when the nozzle is mounted on the movable part, and, for instance, only one of the compressing device, the inlet valve device and the outlet valve device comprises projecting portions on the fixedly located part or even on the movable part.

If the displacement of the press head relative to the hose is not sufficient to expel the intended amount of material from the hose length, the press head may be movably mounted in relation to the second part and may be given an extra stroke displacement by means of a driving motor. In order to obtain a determined stroke length the press head could be mounted on a bar being slidable in relation to the second part inside a bore and being provided with shoulders cooperating with abutment surfaces on the second part. Furthermore, one of these abutment surfaces may have an adjustable position.

The hose length or segment used is for instance a plastics hose of a conventiently high quality.

The invention will now be described with reference to the accompanying drawings on which
Figure 1 shows an embodiment of a glue or soldering paste applying machine according to the invention,
Figure 2 shows sectionally the metering mechanism of the machine in Figure 1, the mechanism being shown in a position for pressing out a predetermined amount of material,
Figure 3 shows schematically the positions of the valve parts in relation to the hose when filling new material into the hose segment.

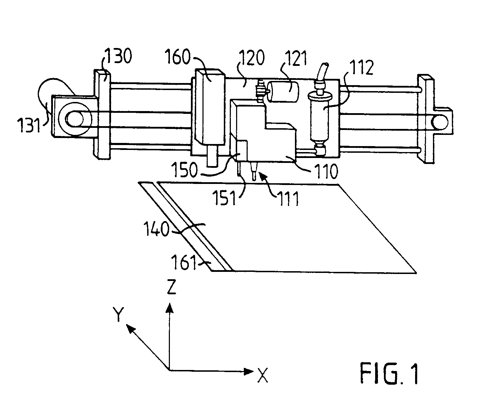

In Figure 1 is shown a glue or soldering paste applying machine and in this machine the main part is an applying device 110. This is mounted on a carriage 120 being movable along a path 130 and can be driven by means of a motor 131 along this path, the direction of which is called the x-direction. The exact construction of the elements 130, 131 are not essential to the invention.

Material is applied by means of a needle nozzle 111 to a target 140, which can be an electronical pattern board. The material is preserved in a container or a material supply 112.

Apparently the pattern board 140 must be able to be displaced in a direction, the y-direction, extending in the horizontal plane and being perpendicular to the x-direction, i.e. to the path 130. If this is done by means of either the methods that the board or the path is movable in the y-direction, is not relevant to the invention.

Further, the applying device or head 110 is movable vertically by means of a motor 121. In addition there is a distance measurement device 150 measuring the level of the pattern board 140 in relation to the applying device 110. In an embodiment of the distance measurement device 150 there is on this measuring device a feeler rod 151 which can be lowered to check the distance of the head 110 and the pattern board 140.

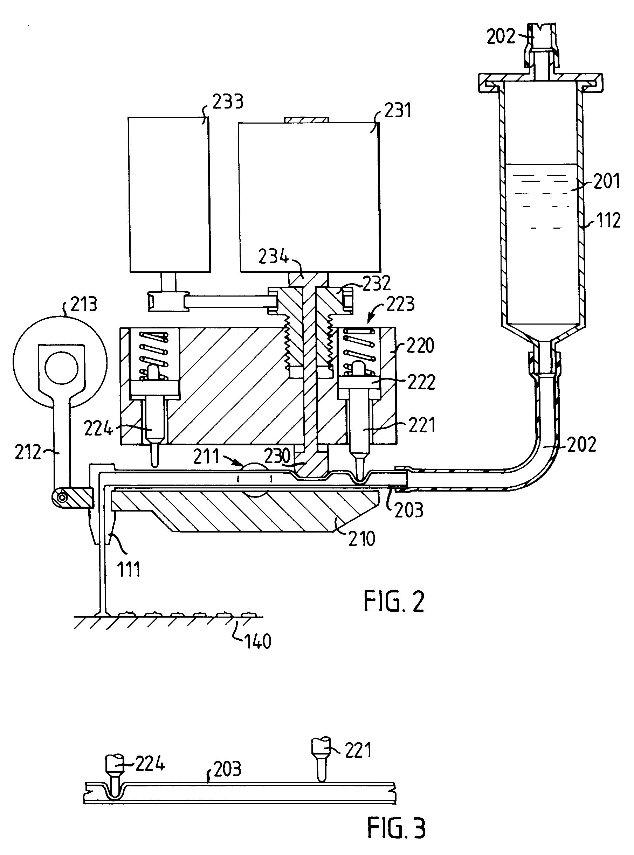

In Figure 2 is shown in detail a section of the applying device 110. Here is shown material 201 filled into the container 112. The container 112 has its top part connected to a pressure source through a hose 202 in such a way that a suitable positive pressure acts on the top surface of the material 201. The container 112 has its outlet end connected to a flexible hose or turbine segment 203 through a hose 202.

The hose length 203 is supported by a base or first part 210 in such a way that the various elements, being explained hereinafter, are arranged adjacent the hose length 203 and can operate both as expressing devices and as shutting off valve devices for the hose length. The elongated base 210 is further pivotably mounted about a shaft 211 which extends perpendicularly to the longitudinal axis of the hose 203 and may pass through a point close to this longitudinal axis. The base 210 and the hose length 203 connected thereto are given a movement forwards and backwards about the swinging axis 211. This is done by the method that the base 210 is connected to a linkage arm 212 having its other end excentrically mounted on a rotating disc 213. This is driven by means of a motor, not shown.

The outlet end of the hose length 203 is, further, connected to the outlet nozzle or the needle nozzle 111 and this nozzle is attached to the base 210.

The free wall surface of the hose 203 cooperates with various protruding portions mounted in a fixedly located housing or second part 220. In this housing 220 an inlet cutting off body 221 is slideably mounted, this body having, at its rear end, a shoulder or projecting locking element and cooperating at this end with one end of a helical compression spring 223. The spring 223 has its other end supported by an abutment means, not shown, mounted inside the housing 220. The valve cutting off body 221 has its front end shaped in a convenient way to be able to cooperate with the hose 203 in such a way that material flow is prevented through this hose when the valve cutting off body 221 is in a heavy engagement with the hose. Thus the front end of the inlet cutting off body may be shaped tapering, for instance with a V-shape having a somewhat rounded point, seen from the side. The front part of the inlet cutting off body 221 slides in a bore of the housing 221, this bore being shaped, at its rear end, as a bore having a larger diameter, receiving the abutment element 222. By means of cooperation of the abutment element 222 and the shoulder being formed in passing between said two diameters, the valve body part 221 is prevented from being loosened from its bore and is also given a determined resting position when this part is not engaged with the hose. An outlet cutting off body 224 constructed in the same way is also in the same way mounted in the house 220. The location of the inlet cutting off body 221 and the outlet cutting off body 224 is such that these can cooperate with the hose on places being located closer to the inlet and the outlet respectively of the hose.

For cooperation with the hose in a place between the valve bodies 221 and 224 a meter press or press head 230 is provided. The press head 230 is arranged on a thinner cylindrical bar passing through a hole of the housing 220 and having at its other end a shoulder or protruding abutment element 234. The bar of the press head 230 is movable in the house 220 between those positions in which the two abutment surfaces being formed by the rear side of the press head 230 and the top shoulder 234 respectively will contact abutment surfaces on the housing 220. The press head 230 is displaced to its projected or lower position as seen in the figure, by activating an electrically driven solenoid 231. Other linear driving means can also be used such as a voice coil drive, a piston cylinder unit driven by fluid, a rack drive. The rear shoulder 234 on the bar of the press head 230 thus cooperates with that surface of the house 220, whis forms a stop for the movement downwards of the press head 230. This surface can be adjustable and may for instance be constituted by a bushing 232 tapped inside the housing 220, this bushing for instance being susceptible to be turned by a regulating motor 233 and a suitable transmission a convenient length to give the press head 230 a correct stroke.

In the case shown in Figure 2 the first part or cradle 210 is in the end position where the nozzle tube 111 is In its low position. In this case material is applied to the target 140. The inlet cutting off body 221 forms together with the ability of the hose to be compressed an inlet valve which is closed. The spring 223 is in this case sufficiently strong to enable a sufficient cutting off by means of the valve being formed by the elements 203 and 210 and 221. Furthermore, in this position the outlet cutting off body 224 is not engaged with the hose 223. No valve effect is thus obtained at the outlet end of the hose 203. An outlet valve is in other cases constituted by the outlet cutting off body 224 together with the ability of the hose 203 to be compressed against the base 210. The excentric disc 213, however, will rotate all the time, this meaning that the cradle 210 will perform its movement forwards and backwards. During a suitable time period, for instance as is shown in Figure 2, the driving means of the metering press 230 is activated by the solenoid 231. The stroke length of the metering press 230 is determined, as has been mentioned above, by the shoulder 232. When the lower surface of the press head 230 will contact the wall of the hose 203, an amount of material will be expressed from the hose and therefrom to the nozzle 111 and further out to the target 140. The volume applied can be adjusted by varying the stroke distance of the metering press 230, for instance as is shown by a change of the abutment surface belonging to the rear shoulder. Instead of a solenoid 231 may, as has been mentioned above, for instance, a pneumatically operated piston cylinder unit be used.

In certain cases the metering press 230 may be fixed relative to the house 220 during all of the applying cycle. The excentric means 213, however, will rotate on and thereby the inlet cutting off body 221 will be released from its engagement with the hose 203, after which in the other end position of the swinging movement of the cradle 210, the outlet cutting off body 224 instead will engage with the surface of the hose 203 to cut off the material flow out from the outlet end of the hose 203. In this case the hose 203 could expand again and be filled with material from the container 212, the material of which is easily injected into the hose 203 by the fact that a slight overatmospheric pressure is acting on the surface of the material supply 201. The positions of the valve bodies for this case are shown in Figure 3.

## Claims

1. A method for applying material such as pastes, adhesives and similar substances in metered amounts comprising
that a soft hose (203) having an inlet end and an outlet is used, the inlet end being connected to a material supply (112) and the outlet end being connected to an applying nozzle (111),
that an inlet valve device and an outlet valve device are arranged for the hose (203), these valve devices being located adjacent the inlet end and the outlet end, respectively, of said hose (203) or being located upstream and downstream, respectively, of a material flow through the hose (203),
that a compressive device (230) is located between the inlet valve device and the outlet valve device, the compressive device being caused to compress a portion of the hose (203) between the valve devices,
that for this compression the outlet valve device is kept open and the inlet valve device closed to allow outflow of material from the hose (203) to the nozzle (111) and that the nozzle (111) during this is placed on position where the material is to be applied,
that during at least part of the time between the compressions the outlet valve device is kept closed and the inlet valve device open to allow new material flowing into the hose (203) from the material supply (112),
that the hose (203) is supported by a first part (210),
that the compressive device and/or the inlet valve device and/or the outlet valve device are constituted of protruding portions (230; 221; 224) on a second part (220),
**characterized in**
that the first and second parts are caused to perform such a relative movement forwards and backwards that the compressive function and/or the inlet valve operation and/or the outlet valve operation are obtained at the times intended, when the corresponding protruding portions (230; 221; 224) on the second part (220) are engaged with the hose (203).

2. A method according to claim 1, **characterized in** that the nozzle (111) is given a movement upwards and downwards by the fact that it is rigidly connected to one (210) of the two parts (210; 220), which moves.

3. A method according to one of claims 1 - 2, when the compressive device is constituted by a protruding portion (230) on a second part (220), **characterized in** that the protruding portion (230) on the second part (220), which forms the compressive device, is given a further movement during a suitably chosen time period in such a way that it will project longer from the second part (220), whereby a heavier compressive effect is obtained.

4. A method according to one of claims 1 to 3, **characterized in** that one (210) of the two parts (210; 220) is caused to perform a swinging movement forwards and backwards and that the other one (220) of the two parts is fixed.

5. A method according to one of claims 1 - 4, **characterized in** that only the first part (210) is caused to move.

6. A method according to one of claims 1 to 5, when the inlet valve device and/or the outlet valve device are constituted of protruding portions (221; 224) on a second part (220), **characterized in** that a protruding portion (221; 224) constituting one of the inlet and outlet valve devices is spring loaded (223).

7. A method according to one of claims 1 to 6, **characterized in** that the protruding portions (230; 221; 224) act approximately perpendicularly to the axis of the hose (203).

8. A device for applying material such as pastes, adhesives and similar substances in metered amounts comprising
a nozzle (111),
a material supply (112), from which material is arranged to flow,
a soft hose (203) which has an inlet end connected to the material supply (112) and receives material through this end and has the outlet end connected to the nozzle (111), and
an inlet valve device and an outlet valve device being arranged for the hose (203), these valve devices being arranged adjacent the inlet end and the outlet end of the hose (203) or being located upstream and downstream, respectively, of the material flow through the hose (203),
a compressive device (230) being located between the inlet valve device and the outlet valve device,
the compressive device being arranged to compress a portion of the hose (203) between the valve devices,
the outlet valve device during this compression being arranged to be open and the inlet valve device to be closed to allow outflow of material from the hose (203) to the nozzle (111) and
during at least part of the time between the compressions the outlet valve device being arranged to be closed and the inlet valve device open to allow new material flowing into the hose (203) from the material supply (112),
the hose (203) being arranged on a first part (210),
the compressive device and/or the inlet valve device and/or the outlet valve device being constituted of portions (230; 221; 224) protruding from a second part (220),
**characterized in**
that means (211 - 213) are provided for causing the first and second parts (210; 220) to perform such a relative movement that the compressive function and/or the inlet valve operation and/or the outlet valve operation are obtained at the times intended when the corresponding portion or portions (230; 210; 220) protruding from the second part (220) are in engagement with the hose (203).

9. A device according to claim 8, **characterized in** that the nozzle (111) is rigidly arranged on one (210) of the two parts (210; 220), which moves, and in such a position and in such a direction, that the nozzle (111) during the operation of the device performs a movement alternately upwards and downwards.

10. A device according to one of claims 8 - 9, **characterized in** that the outlet direction of the nozzle (111) is substantially perpendicular to the longitudinal direction of the soft hose (203).

11. A device according to one of claims 8 - 10, when the compressive device is constituted of a portion (230) protruding from a second part (220), **characterized in** that said protruding portion (230) on the second part (220) which constitutes the compressive device is movably mounted in the second part (220) and is connected to a driving device (231; 233) in such a way, that it during suitable time periods can be made to protrude longer from the second part (220), whereby the compressing function can be reinforced.

12. A device according to one of claims 8 to 11, **characterized in** that one (210) of the two parts (210; 220) is arranged to perform a swinging movement forwards and backwards about an axis (211) and that the other one (220) of the two parts is fixed.

13. A device according to one of claims 8 to 12, **characterized in** that the first part (210) is movable and the second part (220) is fixed.

14. A device according to one of claims 8 to 13, when the inlet valve device and/or the outlet valve device are constituted of portions (221; 224) protruding from a second part (220), **characterized in** that a protruding portion (221; 224) which constitutes the inlet or outlet valve device is spring (223) loaded and thus will be moved, against the action of springs, when being in engagement with the hose (203).

## Patentansprüche

1. Verfahren zum Auftragen von Material, wie beispielsweise Pasten, Klebstoffen und ähnlichen Substanzen in dosierten Mengen, das umfaßt:
einen weichen Schlauch (203) mit einem Einlaßende und einem Auslaßende, wobei das Einlaßende mit einer Materialzufuhrquelle (112) verbunden ist, und das Auslaßende mit einer Auftragdüse (111) verbunden ist,
eine Einlaßventileinrichtung und eine Auslaßventileinrichtung, die für den Schlauch (203) vorhanden sind, wobei sich diese Ventileinrichtungen in der Nähe des Einlaßendes bzw. des Auslaßendes des Schlauches (203) befinden oder sich vor bzw. hinter einem Materialfluß durch den Schlauch (203) befinden,
eine Zusammendrückeinrichtung (230), die sich zwischen der Einlaßventileinrichtung und der Auslaßventileinrichtung befindet, wobei bewirkt wird, daß die Zusammendrückeinrichtung einen Abschnitt des Schlauches (203) zwischen den Ventileinrichtungen zusammendrückt,
wobei bei diesem Zusammendrücken die Auslaßventileinrichtung offen gehalten wird, und die Einlaßventileinrichtung geschlossen gehalten wird, um Austritt des Materials aus dem Schlauch (203) zu der Düse (111) zu ermöglichen, und wobei die Düse (111) dabei an einer Position in Stellung gebracht wird, an der das Material aufgetragen werden soll,
wobei wenigstens während eines Teils der Zeit zwischen den Zusammendrückvorgängen die Auslaßventileinrichtung geschlossen gehalten wird und die Einlaßventileinrichtung offen gehalten wird, so daß frisches Material aus der Materialzufuhrquelle (112) in den Schlauch (203) fließen kann,
wobei der Schlauch (203) von einem ersten Teil (210) getragen wird,
wobei die Zusammendrückeinrichtung und/oder die Einlaßventileinrichtung und/oder die Auslaßventileinrichtung durch vorstehende Abschnitte (230; 221; 224) an einem zweiten Teil (220) gebildet werden,
**dadurch gekennzeichnet**, daß
das erste und der zweite Teil vorwärts und rückwärts so zueinander bewegt werden, daß die Zusammendrückfunktion und/oder die Betätigung des Einlaßventiles und/oder die Betätigung des Auslaßventiles zu den geplanten Zeiten ausgeführt werden, wenn die entsprechenden vorstehenden Abschnitte (230; 221; 224) an dem zweiten Teil (220) mit dem Schlauch (203) in Kontakt kommen.

2. Verfahren nach Anspruch 1, **dadurch gekennzeichnet**, daß die Düse (111) dadurch nach oben und nach unten bewegt wird, daß sie fest mit einem (210) der beiden Teile (210; 220) verbunden ist, das sich bewegt.

3. Verfahren nach einem der Ansprüche 1 - 2, wenn die Zusammendrückeinrichtung durch einen vorstehenden Abschnitt (230) an einem zweiten Teil (220) gebildet wird, **dadurch gekennzeichnet**, daß der vorstehende Abschnitt (230) am zweiten Teil (220), der die Zusammendrückeinrichtung bildet, während eines in geeigneter Weise gewählten Zeitraumes so weiterbewegt wird, daß er weiter aus dem zweiten Teil (220) vorsteht, wodurch eine stärkere Zusammendrückwirkung erreicht wird.

4. Verfahren nach einem der Ansprüche 1 - 3, **dadurch gekennzeichnet**, daß bewirkt wird, daß eines (210) der beiden Teile (210, 220) eine Schwenkbewegung vorwärts und rückwärts ausführt, und daß das andere (220) der beiden Teile stationär ist.

5. Verfahren nach einem der Ansprüche 1 - 4, **dadurch gekennzeichnet**, daß nur das erste Teil (210) bewegt wird.

6. Verfahren nach einem der Ansprüche 1 bis 5, wenn die Einlaßventileinrichtung und/oder die Auslaßventileinrichtung durch vorstehende Abschnitte (221; 224) an einem zweiten Teil (220) gebildet werden, **dadurch gekennzeichnet**, daß ein vorstehender Abschnitt (221; 224), der die Einlaß- oder die Auslaßventileinrichtung bildet, federgespannt (223) ist.

7. Verfahren nach einem der Ansprüche 1 bis 6, **dadurch gekennzeichnet**, daß sich die vorstehenden Abschnitte (230; 221; 224) annähernd senkrecht zur Achse des Schlauches (203) bewegen.

8. Vorrichtung zum Auftragen von Material, wie beispielweise Pasten, Klebstoffen und ähnlichen Substanzen in dosierten Mengen, die umfaßt
eine Düse (111),
eine Materialzufuhrquelle (112), aus der Material fließt,
einen weichen Schlauch (203), der ein mit der Materialzufuhrquelle verbundenes Einlaßende (112) hat und durch dieses Ende Material aufnimmt, und dessen Auslaßende mit der Düse (111) verbunden ist,
und eine Einlaßventileinrichtung sowie eine Auslaßventileinrichtung, die für den Schlauch (203) vorhanden sind, wobei diese Ventileinrichtungen in der Nähe des Einlaßendes bzw. des Auslaßendes des Schlauches (203) angeordnet sind oder sich vor bzw. hinter dem Materialfluß durch den Schlauch (203) befinden,
eine Zusammendrückeinrichtung (230), die sich zwischen der Einlaßventileinrichtung und der Auslaßventileinrichtung befindet,
wobei die Zusammendrückeinrichtung einen Abschnitt des Schlauches (203) zwischen den Ventileinrichtungen zusammendrückt,
wobei die Auslaßventileinrichtung während dieses Zusammendrückens offen ist, und die Einlaßventileinrichtung geschlossen ist, um den Austritt von Material aus dem Schlauch (203) zu der Düse (111) zu ermöglichen, und
wobei wenigstens während eines Teils der Zeit zwischen den Zusammendrückvorgängen die Auslaßventileinrichtung geschlossen ist und die Einlaßventileinrichtung offen ist, so daß frisches Material aus der Materialzufuhrquelle (112) in den Schlauch (203) fließen kann,
wobei der Schlauch (203) an einem ersten Teil (210) angeordnet ist,
wobei die Zusammendrückeinrichtung und/oder die Einlaßventileinrichtung und/oder die Auslaßventileinrichtung durch Abschnitte (230; 221; 224) gebildet werden, die von einem zweiten Teil (220) vorstehen,
**dadurch gekennzeichnet**, daß
Einrichtungen (211-213) vorhanden sind, die bewirken, daß das erste und das zweite Teil (210; 220) eine Bewegung zueinander ausführen, so daß die Zusammendrückfunktion und/oder die Betätigung des Einlaßventiles und/oder die Betätigung des Auslaßventiles zu den geplanten Zeiten ausgeführt werden, wenn der entsprechende Abschnitt oder die Abschnitte (230; 210; 220), die vom zweiten Teil (220) vorstehen, mit dem Schlauch (203) in Kontakt sind.

9. Vorrichtung nach Anspruch 8, **dadurch gekennzeichnet**, daß die Düse (111) starr an einem (210) der beiden Teile (210; 220), das sich bewegt, und in einer solchen Position und solchen Richtung angebracht ist, daß die Düse (111) während der Funktion der Vorrichtung eine abwechselnd nach oben und nach unten gerichtete Bewegung ausführt.

10. Vorrichtung nach einem der Ansprüche 8 bis 9, **dadurch gekennzeichnet**, daß die Auslaßrichtung der Düse (111) im wesentlichen senkrecht zur Längsrichtung des weichen Schlauches (203) ist.

11. Vorrichtung nach einem der Ansprüche 8-10, wenn die Zusammendrückeinrichtung durch einen Abschnitt (230) gebildet wird, der von einem zweiten Teil (220) vorsteht, **dadurch gekennzeichnet**, daß der vorstehende Abschnitt (230) an dem zweiten Teil (220), der die Zusammendrückeinrichtung bildet, beweglich an dem zweiten Teil (220) angebracht ist und mit einer Antriebseinrichtung (231; 233) so verbunden ist, daß sie während geeigneter Zeiträume weiter von dem zweiten Teil (220) vorstehen kann, wodurch die Zusammendrückfunktion verstärkt werden kann.

12. Vorrichtung nach einem der Ansprüche 8 bis 11, **dadurch gekennzeichnet**, daß eines (210) der beiden Teile (210; 220) eine Schwenkbewegung vorwärts und rückwärts um eine Achse (211) ausführt, und daß das andere (220) der beiden Teile stationär ist.

13. Vorrichtung nach einem der Ansprüche 8 bis 12, **dadurch gekennzeichnet**, daß das erste Teil (210) beweglich ist, und das zweite Teil (220) stationär ist.

14. Vorrichtung nach einem der Ansprüche 8 bis 13, wenn die Einlaßventileinrichtung und/oder die Auslaßventileinrichtung durch Abschnitte (221; 224) gebildet werden, die von einem zweiten Teil (220) vorstehen, **dadurch gekennzeichnet**, daß ein vorstehender Abschnitt (221; 224), der die Einlaß- oder Auslaßventileinrichtung bildet, federgespannt (223) ist und dadurch gegen die Wirkung von Federn bewegt wird, wenn er mit dem Schlauch (203) in Kontakt ist.

## Revendications

1. Procédé pour appliquer de la matière telle que des pâtes, des adhésifs et des substances similaires en quantités dosées, selon lequel :
on utilise un tuyau souple (203) ayant une entrée et une sortie, l'extrémité d'entrée étant connectée à un réservoir de matière (112) et l'extrémité de sortie étant connectée à une buse d'application (111),
un dispositif formant valve d'entrée et un dispositif formant valve de sortie sont disposés sur le tuyau (203), ces dispositifs formant valve étant respectivement adjacents à l'extrémité d'entrée et à l'extrémité de sortie dudit tuyau (203) ou étant respectivement situés en amont et en aval dans un écoulement de matière dans le tuyau (203),
un dispositif de compression (230) est situé entre le dispositif formant valve d'entrée et le dispositif formant valve de sortie, le dispositif de compression étant actionné pour comprimer une partie du tuyau (203) située entre les dispositifs de valve,
pour cette compression, le dispositif formant valve de sortie est maintenu ouvert et le dispositif formant valve d'entrée fermé pour permettre l'évacuation de la matière du tuyau (203) dans la buse (111) et la buse (111) durant cette opération est placée à l'endroit où la matière doit être appliquée,
durant au moins une partie du temps qui s'écoule entre les compressions, le dispositif formant valve de sortie est maintenu fermé et le dispositif formant valve d'entrée ouvert pour permettre l'admission de matière neuve dans le tuyau (203) depuis le réservoir de matière (112),
le tuyau (203) est supporté par une première pièce (210),
le dispositif de compression et/ou le dispositif formant valve d'entrée et/ou le dispositif formant valve de sortie sont constitués de parties faisant saillie (230; 221; 224) sur une seconde pièce (220),
caractérisé en ce que
la première et la seconde pièce sont amenées à exécuter un mouvement relatif d'avancée et de recul tel que la fonction de compression et/ou le fonctionnement de la valve d'entrée et/ou le fonctionnement de la valve de sortie soient obtenus aux moments recherchés, lorsque les parties faisant saillie correspondantes (230; 221; 224) prévues sur la seconde pièce (220) sont en prise avec le tuyau (203).

2. Procédé selon la revendication 1, caractérisé en ce que la buse (111) est mue vers le haut et vers la bas par le fait qu'elle est connectée de manière rigide à l'une (210) des deux pièces (210; 220), qui se déplace.

3. Procédé selon l'une des revendications 1 ou 2, où le dispositif de compression est constitué d'une partie faisant saillie (230) sur une seconde pièce (220), caractérisé en ce que la partie faisant saillie ((230) sur la seconde pièce (220), qui forme le dispositif de compression, reçoit une impulsion supplémentaire durant une période de temps convenablement choisie de telle sorte qu'elle se projettera plus loin par rapport à la seconde pièce (220), par quoi on obtient un effet de compression plus intense.

4. Procédé selon l'une des revendications 1 à 3, caractérisé en ce que l'une (210) des deux pièces (210; 220) est actionnée pour exécuter un mouvement oscillant vers l'avant et vers l'arrière, et l'autre (220) pièce est fixe.

5. Procédé selon l'une des revendications 1 à 4, caractérisé en ce que seule la première pièce (210) est amenée à se déplacer.

6. Procédé selon l'une des revendications 1 à 5, où le dispositif formant valve d'entrée et/ou le dispositif formant valve de sortie sont constitués de parties (221; 224) faisant saillie sur une seconde pièce (220), caractérisé en ce qu'une partie faisant saillie (221; 224) constituant l'un des dispositifs formant valve d'entrée et de sortie, est chargé par un ressort (223).

7. Procédé selon l'une des revendications 1 à 6, caractérisé en ce que les parties faisant saillie (230; 221; 224) agissent approximativement perpendiculairement à l'axe du tuyau (203).

8. Dispositif pour appliquer une matière telle que des pâtes, des adhésifs et des substances similaires en quantités dosées, comprenant
une buse (111),
un réservoir de matière (112), depuis lequel la matière est disposée pour s'écouler,
un tuyau souple (203) qui comporte une extrémité d'entrée connectée au réservoir de matière (112) et reçoit la matière par cette extrémité, et une extrémité de sortie connectée à la buse (111), et
un dispositif formant valve d'entrée et un dispositif formant valve de sortie disposés sur le tuyau (203), ces dispositifs formant valve étant adjacents à l'extrémité d'entrée et à l'extrémité de sortie du tuyau (203), ou situés en amont et en aval, respectivement, de l'écoulement de matière dans le tuyau (203),
un dispositif de compression situé entre le dispositif formant valve d'entrée et le dispositif formant valve de sortie,
le dispositif de compression étant disposé pour comprimer une partie du tuyau située entre les dispositifs formant valve,
le dispositif formant valve de sortie étant disposé pour rester ouvert et le dispositif formant valve d'entrée étant disposé pour rester fermé, durant cette compression, afin de permettre l'écoulement de la matière depuis le tuyau (203) vers la buse (111), et
le dispositif formant valve de sortie étant disposé pour rester fermé, et le dispositif formant valve d'entrée étant disposé pour rester ouvert durant au moins une partie du temps qui s'écoule entre les compressions, afin de permettre l'écoulement de matière nouvelle dans le tuyau (203) depuis le réservoir de matière (112),
le tuyau (203) étant disposé sur une première pièce (210),
le dispositif de compression et/ou le dispositif formant valve d'entrée et/ou le dispositif formant valve de sortie étant constitués de parties (230; 221; 224) faisant saillie sur une seconde pièce (220),
caractérisé en ce que
des moyens (211-213) sont prévus pour amener la première et la seconde pièce (210; 220) à exécuter un mouvement relatif tel que la fonction de compression et/ou le fonctionnement de la valve d'entrée et/ou le fonctionnement de la valve de sortie sont obtenus aux moments recherchés lorsque la partie ou les parties correspondante(s) (230; 221; 224) faisant saillie sur la seconde pièce (220) sont en prise avec le tuyau (203).

9. Dispositif selon la revendication 8, caractérisé en ce que la buse (111) est disposée de manière rigide sur l'une (210) des deux pièces (210; 220) qui se déplace, et dans une position telle et dans une direction telle, que la buse (111) durant le fonctionnement du dispositif, exécute un mouvement alternatif vers le haut et vers le bas.

10. Dispositif selon l'une des revendications 8-9, caractérisé en ce que la direction de la sortie de la buse (111) est sensiblement perpendiculaire au sens longitudinal du tuyau souple (203).

11. Dispositif selon l'une des revendications 8 à 10, dans lequel le dispositif de compression est constitué d'une pièce (230) faisant saillie sur une seconde pièce (220), caractérisé en ce que ladite partie faisant saillie (230) sur la seconde pièce (220) qui constitue le dispositif de compression est montée de façon mobile sur la seconde pièce (220) et est connectée à un dispositif d'entraînement (231; 233) de telle manière que durant des laps de temps appropriés, elle puisse être actionnée pour faire saillie plus loin sur la seconde pièce (220), ce par quoi la fonction de compression peut être renforcée.

12. Dispositif selon l'une des revendications 8 à 11, caractérisé en ce que l'une (210) des deux pièces (210; 220) est disposée pour exécuter un mouvement oscillant vers l'avant et vers l'arrière autour de l'axe (211) et que l'autre (220) des deux pièces est fixée.

13. Dispositif selon l'une des revendications 8 à 12, caractérisé en ce que la première pièce (210) est mobile et que l'autre des deux pièces (220) est fixe.

14. Dispositif selon l'une des revendications 8 à 13, lorsque le dispositif formant valve d'entrée et/ou le dispositif formant valve de sortie sont constitués de parties (221; 224) faisant saillie sur une seconde pièce (220), caractérisé en ce qu'une partie faisant saillie (221; 224) constituant le dispositif formant valve d'entrée ou de sortie est actionnée par un ressort (223) et sera donc mise en mouvement, contre l'action de ressorts, pendant qu'elle est en prise avec le tuyau (203).
